# EUROPÄISCHE PATENTSCHRIFT

(11) **EP 1 281 442 B1**
(45) Veröffentlichungstag und Bekanntmachung des Hinweises auf die Patenterteilung: **14.06.2006**
(21) Anmeldenummer: 02008911.6
(22) Anmeldetag: 20.04.2002
(51) Int. Cl.: B02C 15/00, F16H 57/02

(54) **Getriebegehäuse für das Getriebe einer Wälzmühle und ein Giessmodell für das Getriebegehäuse**
Gearbox casing for the gearbox of a roller mill and casting form for the gearbox casing
Carter de boîte de vitesses pour boîte de vitesses d'un broyeur à rouleaux et une modele de moulage pour le carter de boîte de vitesses

(30) Priorität: 30.07.2001 DE 10136915
(43) Veröffentlichungstag der Anmeldung: 05.02.2003
(73) Patentinhaber: A. FRIEDR. FLENDER AG, 46395 Bocholt (DE)
(72) Erfinder: Storcks, Udo, 46342 Velen-Ramsdorf (DE); Jaufmann, Christian, Dr., 46399 Bocholt (DE); Böttcher, Alexandra, 46397 Bocholt (DE); Klein-Hitpass, Arno, 46395 Bocholt (DE)
(74) Vertreter: Radünz, Ingo

(56) Entgegenhaltungen:
- DE-A- 2 716 025
- GB-A- 1 588 172
- US-A- 4 218 023
- US-A- 5 100 068

## Beschreibung

Die Erfindung betrifft ein Getriebegehäuse für das Getriebe einer Wälz- oder Schüsselmühle mit vertikaler Drehachse mit den Merkmalen des Oberbegriffes des Anspruches 1 sowie ein Gießmodell zur Herstellung des Getriebegehäuses.

Wälz- oder Schüsselmühlen, bei denen auf einer sich drehenden Mahlschüssel stationär angeordnete Mahlkörper abrollen, werden für die Zerkleinerung von Kalkstein, Klinker, Schlacke, Kalk, Gips und Kohle in der Baustoffindustrie und bei der Kohleaufbereitung eingesetzt. Für den Antrieb dieser Mühlen können Standardgetriebe eingesetzt werden, die auf die besonderen Einsatzbedingungen abgestimmt sind (Firmendruckschrift W 106-3 DE/EN 8.97 der A. Friedr. Flender AG). Die Getriebe müssen die Leistung vom Motor zur Mahlschüssel übertragen, die Drehzahl des Motors auf die erforderliche Mühlendrehzahl reduzieren und vor allem die Lagerung der Mahlschüssel übernehmen. Als Getriebeübersetzungsstufen können ein Kegelrad-Planeten- oder auch Kegelrad-Stirnrad-Planeten-Anordnungen verwendet werden, die in einem einteiligen, zylindrischen, stahlgeschweißten oder gegossenen und mit Verstärkungsrippen versehenen Getriebegehäuse untergebracht ist.

Durch den Mahlvorgang treten besonders hohe Axialkräfte auf, die über ein Axiallager und das Getriebegehäuse in das Fundament geleitet werden müssen. Das Axiallager ruht auf einer kreisringförmigen Auflagefläche, die auf dem Getriebegehäuse aufliegt. Das Axiallager besteht aus mehreren trapezförmigen Kippsegmentgleitlagern, die auf einem Kreis mit dem so genannten mittleren Segmentlagerdurchmesser angeordnet sind. Auf diesem Kreis liegen die Auflagepunkte der Segmentlager. Der Betrag des mittleren Segmentlagerdurchmessers ist durch Mühlenkonfiguration bezüglich des Kraftangriffes und der Höhe der Mahlkraft vorgegeben.

Die DE 27 16 025 A beschreibt ein Getriebe mit einen Mahlschüssel- Aufnahmeplatte deren gesamte Belastung über das Getriebegehaüse - Oberteil 3 und das Getriebegehäuse- Unterteil 7 auf das Fundament 8 übertragen wird.

Bei den bekannten zylindrischen Getriebegehäusen entspricht der mittlere Segmentlagerdurchmesser dem Durchmesser des zylindrischen Getriebegehäuses. Daraus ergibt sich für jede Mühlenkonfiguration ein eigenes Getriebegehäuse. Hinzu kommt, dass durch die bekannte Verrippung des Getriebegehäuses dort Spannungserhöhungen auftreten, wo Lagersegmente in der Nähe einer Rippe angeordnet sind.

Die Erfindung liegt der Aufgabe zugrunde, ein gattungsgemäßes Getriebegehäuse derart weiterzuentwickeln, dass es kraftflussoptimiert ist und unterschiedliche Größen von mittleren Segmentlagerdurchmessern in einem einzigen Getriebegehäuse aufnehmen kann.

Die Aufgabe wird bei einem gattungsgemäßen Getriebegehäuse erfindungsgemäß durch die kennzeichnenden Merkmale des Anspruches 1 gelöst. Ein Gießmodell ist Gegenstand des Anspruches 5. Vorteilhafte Ausgestaltungen der Erfindung sind in den Unteransprüche angegeben.

Der keilförmig zulaufende Übergang in die Auflagefläche besitzt eine stützende Wirkung und verhindert in Verbindung mit der zylindrischen, wellenförmigen Wand des Getriebegehäuses ein seitliches Abkippen der Auflagefläche. Durch diese Gestaltung des Getriebegehäuses im Bereich der Krafteinleitung erfolgt die Weiterleitung der Kraft zum zylindrischen, wellenförmigen Teil und schließlich zum Fundament mit minimalen mechanischen Spannungen im gesamten Getriebegehäuse. Die Formgestaltung des Getriebegehäuses ist damit strukturmechanisch optimal ausgelegt.

Ebenso kann durch den keilförmig zulaufende Übergang in Verbindung mit der zylindrischen, wellenförmigen Wand des Getriebegehäuses die Auflagefläche verbreitert werden, so dass unterschiedlich große mittlere Segmentlagerdurchmesser bei ein und demselben Getriebegehäuse zu realisieren sind. Durch eine Vergrößerung des mittleren Segmentlagerdurchmesser kann die Anzahl der Segmentlager erhöht werden. Eine Neukonstruktion des Getriebegehäuses für unterschiedliche mittlere Segmentlagerdurchmesser ist damit überflüssig, so dass die Variantenvielfalt auf ein Minimum reduziert werden kann.

Ein Ausführungsbeispiel der Erfindung ist in der Zeichnung dargestellt und wird im Folgendem näher erläutert. Es zeigen:

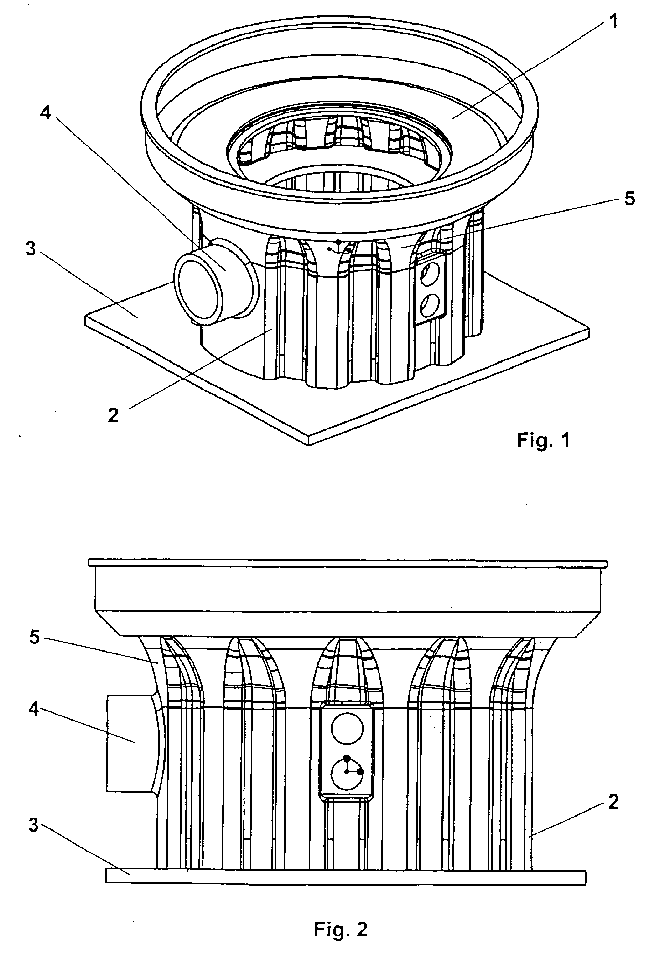

Fig. 1 ein Getriebegehäuse in perspektivischer Darstellung,
Fig. 2 die Vorderansicht des Getriebegehäuses,

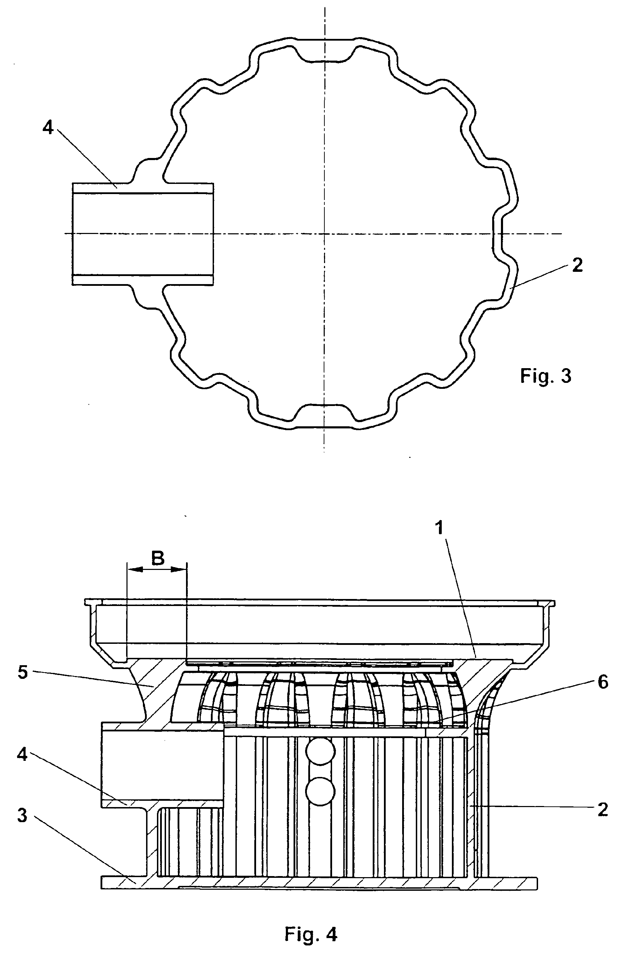

Fig. 3 die Draufsicht auf die zylindrische Wand und
Fig. 4 den Längsschnitt durch das Getriebegehäuse.

Das in der Zeichnung dargestellte Getriebegehäuse nimmt Getriebestufen zum Antrieb einer Wälz- oder Schüsselmühle mit einer vertikalen Drehachse auf. Das Getriebe ist vorzugsweise als Kegelrad-Planetengetriebe ausgebildet mit einer waagerechten Antriebswelle, einem vertikalem Abtrieb, mit einem Planetenträger und mit einem in dem Getriebegehäuse angeordneten Hohlrad. Der Planetenträger ist drehfest mit einem Anschlussflansch verbunden, der aus dem Getriebegehäuse herausragt und mit der Mahlschüssel der Wälz- oder Schüsselmühle verbunden ist. Zur Aufnahme der Mahlkraft ist der mit der Mahlschüssel verbundene Anschlussflansch auf einem Axiallager abgestützt, das auf einer kreisringförmigen Auflagefläche 1 in dem Getriebegehäuse aufliegt. Das Axiallager besteht aus mehreren trapezförmigen Kippsegmentgleitlagern, die auf einem Kreis mit dem so genannten mittleren Segmentlagerdurchmesser angeordnet sind. Ein solches Getriebe ist aus dem eingangs genannten Stand der Technik bekannt, so dass auf eine Darstellung des Getriebes verzichtet und nur das Getriebegehäuse selbst dargestellt wurde.

Das Getriebegehäuse weist eine zylindrische Wand 2 auf, die auf einer Fundament- oder Bodenplatte 3 aufsteht. Die zylindrische Wand 2 des Getriebegehäuses ist mit einem Stutzen 4 für den Durchtritt der Antriebswelle der Kegelstufe des Getriebes versehen.

Die zylindrische Wand 2 ist wellenförmig gestaltet, wodurch bezogen auf einen äußeren Kreis Wellenberge und Wellentäler gebildet sind. Die Kontur der Wellenform ist symmetrisch. Diese Wand 2 geht nach oben fließend in die kreisringförmige Auflagefläche 1 über, auf der die Kippsegmentgleitlager des Axiallagers aufliegen. Die Breite der Auflagefläche 1 ist größer als die Dicke der Wand 2.

Der fließende Übergang 5 der zylindrischen Wand 2 in die Auflagefläche 1 erfolgt über einem Konus, der eine dreifach abgeschrägte biegesteife Gehäusewand mit drei räumlichen Neigungen oder Schrägen darstellt. Dieser konusförmige Übergang 5 übt eine stützende Wirkung auf die Auflagefläche 1 aus und verhindert ein seitliches Abkippen der Auflagefläche 1. Die Breite B der Auflagefläche 1 kann so groß bemessen werden, dass der mittlere Segmentlagerdurchmesser auf unterschiedlich große Werte bei ein und demselben Getriebegehäuse mit einer vorgegebenen zylindrischen Wand 2 ausgelegt werden kann.

Das Getriebegehäuse wird als ein Stück durch Gießen hergestellt. Als Werkstoff wird Kugelgraphit verwendet. Zum Gießen des Getriebegehäuses wird ein Gießmodell verwendet, das eine waagerechte Modellteilung 6 aufweist. Diese waagerechte Modellteilung 6 liegt in einer Ebene unterhalb des konischen Übergang 5 der zylindrischen Wand 2 in die Auflagefläche 1. Auf diese Weise entsteht ein Modelloberteil, das den konischen Übergang 5 und die Auflagefläche 1 formt, und ein Modellunterteil, das die zylindrische Wand 2 formt. Mit einem Modellunterteil können mehrere Modelloberteile kombiniert werden, die unterschiedlich breite Auflageflächen 1 formen. Mit diesem Gießmodell kann die Breite der Auflagefläche 1 zusätzlich variiert werden, indem das Modelloberteil bei vorgegebenem Modellunterteil ausgewechselt wird. Aufgrund der symmetrischen Kontur der zylindrischen, wellenförmigen Wand 2 sind wenige unterschiedliche Kernmodelle für das Gießen des Getriebegehäuses erforderlich.

## Patentansprüche

1. Getriebegehäuse für das Getriebe einer Wälz- oder Schüsselmühle mit vertikaler Drehachse, wobei die Wand (2) des Getriebegehäuses zylindrisch ausgebildet ist und auf dem Getriebegehäuse eine kreisringförmige Auflagefläche (1) für ein Axiallager vorgesehen ist, das aus mehreren auf einem mittleren Segmentlagerdurchmesser angeordneten Kippsegmentgleitlagern besteht, **dadurch gekennzeichnet, dass** das Getriebegehäuse ein einstückiges Gussteil ist und dass die zylindrische Wand (2) des Getriebegehäuses wellenförmig ausgebildet ist und fließend in die kreisringförmige Auflagefläche (1) für das Axiallager übergeht.

2. Getriebegehäuse nah Anspruch 1, **dadurch gekennzeichnet, dass** die kreisringförmige Auflagefläche (1) so breit bemessen ist, dass ein und dasselbe Getriebegehäuse auf mehrere unterschiedlich große Segmentlagerdurchmesser auslegbar ist.

3. Getriebegehäuse nach Anspruch 1 oder 2, **dadurch gekennzeichnet, dass** der Übergang (5) zwischen der zylindrischen, wellenförmigen Wand (2) des Getriebegehäuses und der kreisringförmigen Auflagefläche (1) konusförmig ausgebildet ist und eine dreifach abgeschrägte Gehäusewand bildet.

4. Getriebegehäuse nach einem der Ansprüche 1 bis 3, **dadurch gekennzeichnet, dass** die Kontur der zylindrischen, wellenförmigen Wand (2) des Getriebegehäuses symmetrisch ausgeführt ist.

5. Gießmodell eines Getriebegehäuses nach den Ansprüchen 1 bis 4, **dadurch gekennzeichnet, dass** in einer Ebene unterhalb des Überganges (5) zwischen der zylindrischen, wellenförmigen Wand (2) des Getriebegehäuses und der kreisringförmigen Auflagefläche (1) eine waagerechte Modellteilung (6) vorgesehen ist.

## Claims

1. Transmission housing for the transmission of a roller grinding mill or bowl mill with vertical axis of rotation, wherein the wall (2) of the transmission housing is of cylindrical construction and provided on the transmission housing is a circularly annular support surface (1) for an axial bearing, which consists of a plurality of tilt segment slide bearings arranged on a mean segment bearing diameter, **characterised in that** the transmission housing is an integral cast part and that the cylindrical wall (2) of the transmission housing is of wavy construction and has a fluid transition to the annular support surface (1) for the axial bearing.

2. Transmission housing according to claim 1, **characterised in that** the circularly annular support surface (1) is dimensioned to be of such width that one and the same transmission housing can be designed for several segment bearing diameters of different size.

3. Transmission housing according to claim 1 or 2, **characterised in that** the transition (5) between the cylindrical, wavy wall (2) of the transmission housing and the circularly annular support surface (1) is formed to be conical and forms a housing wall with triple chamfering.

4. Transmission housing according to one of claims 1 to 3, **characterised in that** the contour of the cylindrical, wavy wall (2) of the transmission housing is of symmetrical construction.

5. Casting pattem of a transmission housing according to claims 1 to 4, **characterised in that** a horizontal pattern separation (6) is provided in a plane below the transition (5) between the cylindrical, wavy wall (2) of the transmission housing and the circularly annular support surface (1).

## Revendications

1. Carter d'engrenage pour l'engrenage d'un broyeur à rouleaux ou à cuve tournante muni d'un axe de rotation vertical, la paroi (2) du carter d'engrenage ayant une configuration cylindrique et une surface d'appui (1) en forme d'anneau de cercle étant prévue sur le carter pour une butée qui est constituée de plusieurs paliers lisses à segments oscillants disposés sur un diamètre de palier à segments moyen, **caractérisé en ce que** le carter d'engrenage est une pièce coulée monobloc et que la paroi cylindrique (2) du carter d'engrenage a une configuration ondulée et se prolonge continûment par une surface d'appui (1) en forme d'anneau de cercle pour la butée.

2. Carter d'engrenage suivant la revendication 1, **caractérisé en ce que** la surface d'appui (1) en forme d'anneau de cercle est dimensionnée avec une largeur telle qu'un seul et même carter d'engrenage peut être dimensionné sur plusieurs diamètres de paliers à segments différemment grands.

3. Carter d'engrenage suivant l'une des revendications 1 et 2, **caractérisé en ce que** la transition (5) entre la paroi cylindrique ondulée (2) du carter d'engrenage et la surface d'appui (1) en forme d'anneau de cercle est configurée en forme de cône et forme une paroi de carter à triple chanfrein.

4. Carter d'engrenage suivant l'une des revendications 1 à 3, **caractérisé en ce que** le contour de la paroi ondulée cylindrique (2) du carter d'engrenage est réalisée symétrique.

5. Modèle de moulage d'un carter d'engrenage suivant les revendications 1 à 4, **caractérisé en ce qu'**un joint de modèle horizontal (6) est prévu dans un plan au-dessous de la transition (5) entre la paroi ondulée cylindrique (2) du carter d'engrenage et la surface d'appui (1) en forme d'anneau de cercle.
